# EUROPÄISCHE PATENTSCHRIFT

(11) **EP 4 150 740 B1**
(45) Veröffentlichungstag und Bekanntmachung des Hinweises auf die Patenterteilung: **25.03.2026**
(21) Anmeldenummer: 21729805.8
(22) Anmeldetag: 28.04.2021
(51) Int. Cl.: H02K 5/06, H02K 15/00, H02K 15/02, H02K 1/18

(54) **VERFAHREN ZUM HERSTELLEN EINES ELEKTROMOTORS UND ELEKTROMOTOR, HERGESTELLT NACH DEM VERFAHREN**
METHOD FOR PRODUCING AN ELECTRIC MOTOR, AND ELECTRIC MOTOR PRODUCED ACCORDING TO THE METHOD
PROCÉDÉ DE FABRICATION D'UN MOTEUR ÉLECTRIQUE ET MOTEUR ÉLECTRIQUE FABRIQUÉ SELON LEDIT PROCÉDÉ

(30) Priorität: 15.05.2020 DE 102020002930
(43) Veröffentlichungstag der Anmeldung: 22.03.2023
(73) Patentinhaber: SEW-EURODRIVE GmbH & Co. KG, 76646 Bruchsal (DE)
(72) Erfinder: HÄFFELE, Jochen, 76646 Bruchsal (DE); ROHM, Thomas, 76228 Karlsruhe (DE)
(86) Internationale Anmeldenummer: PCT/EP2021/061144
(87) Internationale Veröffentlichungsnummer: WO 2021/228553

(56) Entgegenhaltungen:
- JP-A- 2005 354 870
- KR-A- 20180 021 468
- US-A- 5 218 252
- US-A1- 2008 061 645
- US-A1- 2020 112 226

## Beschreibung

Die Erfindung betrifft ein Verfahren zum Herstellen eines Elektromotors und einen Elektromotor, hergestellt nach dem Verfahren.

Es ist allgemein bekannt, dass ein Elektromotor ein in einem Statorgehäuse aufgenommenes Statorblechpaket aufweist.

Aus der US 2017 / 0 085 138 A1 ist ein Synchronmotor bekannt.

Aus der WO 2007 / 107 131 A1 ist ein Stator für einen Elektromotor bekannt.

Aus der DE 10 2014 206 847 A1 ist ein Stator einer rotierenden elektrischen Maschine bekannt.

Aus der DE 10 2009 000 621 A1 ist ein Motor bekannt.

**Aus der** US 2020 / 112226 A1 **ist als nächstliegender Stand der Technik ein Verfahren zum Herstellen eines Elektromotors bekannt.**

**Aus der** KR 2018 0021468 A **ist ein Statorblechpaket eines Elektromotors bekannt.**

**Aus der** US 5 218 252 A **ist eine dynamoelektrische Maschine mit Statorpositionierung bekannt.**

**Aus der** JP 2005 354870 A **ist ein Einzelblech eines Statorblechpaketes bekannt.**

**Aus der** US 2008 / 061645 A1 **ist eine Pumpe mit elektrischem Motor bekannt.**

Der Erfindung liegt daher die Aufgabe zugrunde, eine einfache Herstellung eines Elektromotors auszubilden.

Erfindungsgemäß wird die Aufgabe bei dem Verfahren nach den in Anspruch 1 und bei dem Elektromotor nach den in Anspruch 15 angegebenen Merkmalen gelöst.

Wichtige Merkmale der Erfindung bei dem Verfahren zum Herstellen eines Elektromotors sind, dass der Elektromotor ein Statorblechpaket und ein Statorgehäuse mit einer Aufnahmebohrung zur Aufnahme des Statorblechpakets aufweist,
wobei das Statorblechpaket Einzelbleche aufweist,
wobei das Statorblechpaket in die Aufnahmebohrung mittels eines Stempelteils mittels Einpressen, insbesondere während eines Einpressvorgangs, eingeführt wird,
wobei Materialbereiche zumindest eines ersten der Einzelbleche des Statorblechpakets nach radial außen hervorstreckt und beim Einpressen Vertiefungen in der Wandung der Aufnahmebohrung, insbesondere in der Bohrwand der Aufnahmebohrung, erzeugt,
wobei das Statorblechpaket mittels der Vertiefungen, insbesondere der nach radial außen sich erstreckenden Vertiefungen, in Umfangsrichtung formschlüssig gehalten ist.

Von Vorteil ist dabei, dass das Statorblechpaket mit einem Werkzeug, nämlich dem Stempelteil, in axialer Richtung eingepresst wird, welches derart kleine Kontaktflächen hat, dass Materialbereiche in radialer Richtung ausweichen, die dann beim axialen Hineinbewegen in die Aufnahmebohrung des Statorgehäuses dieses ankratzen, also Vertiefungen bilden, die sich axial erstrecken. Diese Vertiefungen sind beispielsweise jeweils als Nut oder Furche bezeichenbar. In Umfangsrichtung liegt somit eine formschlüssige Sicherung des Statorblechpakets in dem Statorgehäuse vor.

Somit ist also beim bloßen, axial gerichteten Einführen des Statorblechpakets schon während des Einführens, wenn das Statorblechpaket nur eine durch Reibung bewirkte Reaktionskraft gegen die Einpresskraft aufbaut, eine Verformung des Statorblechpakets bewirkbar und somit ein radiales Hervortreten von Materialbereichen eines oder mehrerer Einzelbleche des Statorblechpakets. Dieses Hervortreten ist also schon vor Erreichen eines Absatzes des Statorgehäuses, welcher das weitere Einschieben des Statorblechpakets in die Aufnahmebohrung verhindert, wirksam. Somit werden Vertiefungen schon von der Öffnung, also dem von dem Absatz abgewandten Endbereich der Aufnahmebohrung, an eingeschnitten ins Material des Statorgehäuses. Anders ausgedrückt münden die Vertiefungen am von dem Absatz abgewandten Endbereich der Aufnahmebohrung in die Umgebung. Nach dem Stoppen der Einführbewegung durch den Absatz ist es in einer Weiterbildung der Erfindung möglich, dass die Presskraft sogar noch etwas erhöht wird.

Das bloße axiale Einschieben bewirkt also den Formschluss in Umfangsrichtung mittels Verformen des vom Stempelteil aus gesehen nächstgelegenen, also ersten, oder der ersten Einzelbleche des Statorblechpakets.

Bei einer vorteilhaften Ausgestaltung weist das Stempelteil zum Statorblechpaket hervorragende Zapfen auf. Von Vorteil ist dabei, dass ein hoher Druck infolge der kleinen Kontaktfläche aufbaubar ist, welcher die gewünschte Verformung in radialer Richtung bewirkbar macht. Die nach radial außen austretenden Materialbereiche sind aber in Umfangsrichtung in einem Umfangswinkelbereich angeordnet, welcher den von dem jeweiligen Zapfen überdeckten Umfangswinkelbereich umfasst. Der radiale Austritt ist also in Umfangsrichtung gesehen also nur lokal vorgesehen.

Bei einer vorteilhaften Ausgestaltung wird beim Einpressen die Presskraft über die Zapfen in das Statorblechpaket eingeleitet. Von Vorteil ist dabei, dass ein hoher Druck aufbaubar ist, weil die Zapfen die einzigen Bereiche des Stempelteils sind, welche das Statorblechpaket berühren.

Bei einer vorteilhaften Ausgestaltung weis die Zapfen in Umfangsrichtung regelmäßig beabstandet sind, insbesondere voneinander regelmäßig beabstandet sind. Von Vorteil ist dabei, dass eine gleichmäßige Kraftverteilung bewirkbar ist.

Bei einer vorteilhaften Ausgestaltung ist das Statorblechpaket, insbesondere die Einzelbleche des Statorblechpakets, aus einem härteren Material als das Statorgehäuse gefertigt. Von Vorteil ist dabei, dass ein Einschneiden der radial hervorgetretenen Materialbereiche in das Statorgehäuse in einfacher Weise ermöglicht ist.

Bei einer vorteilhaften Ausgestaltung ist das Statorblechpaket aus Stahl, insbesondere die Einzelbleche des Statorblechpakets aus Stahlblech, und das Statorgehäuse aus Aluminium gefertigt. Von Vorteil ist dabei, dass ein Einschneiden der radial hervorgetretenen Materialbereiche in das Statorgehäuse in einfacher Weise ermöglicht ist, insbesondere schon bei einer geringen Presskraft.

Bei einer vorteilhaften Ausgestaltung sind die Einzelbleche als Stanzteile gefertigt. Von Vorteil ist dabei, dass eine einfache kostengünstige Herstellung ermöglicht ist.

Bei einer vorteilhaften Ausgestaltung erzeugt der jeweilige Zapfen beim Einpressen eine jeweilige axial gerichtete Vertiefung am Statorblechpaket. Von Vorteil ist dabei, dass die Vertiefung sich axial erstreckt.

Bei einer vorteilhaften Ausgestaltung weist das Statorblechpaket miteinander schweißverbundene Einzelbleche auf und/oder miteinander klammerverbundene Einzelbleche und/oder miteinander durch Stanzpaketierung verbundene Einzelbleche. Von Vorteil ist dabei, dass eine einfache Herstellung ermöglicht ist.

Bei einer vorteilhaften Ausgestaltung wird das Einführen durch einen nach radial innen hervorragenden Absatz des Statorgehäuses beendet, nachdem das Statorblechpaket zum Anliegen an dem Absatz gekommen ist oder kommt. Von Vorteil ist dabei, dass eine genau definierte Beendigung des Einführens vorgesehen ist.

Bei einer vorteilhaften Ausgestaltung wird das nach radial außen gerichtete Hervorstrecken schon vor dem Anliegen des Statorblechpakets am Absatz bewirkt, während also als Reaktionskraft gegen die Presskraft beim Einpressen, insbesondere also gegen das Einpressen des Stempelteils, nur die Reibung zwischen Statorgehäuse und Statorblechpaket wirkt. Von Vorteil ist dabei, dass schon während der Zeitspanne, während der das erste Einzelblech noch von Luft umgeben ist, schon die Materialbereiche radial hervortreten, so dass schon beim Eintreten des ersten Einzelblechs in die zum Statorblechpaket passgenau gefertigte Aufnahmebohrung ein Einschneiden ins Material des Statorblechpakets ermöglicht ist.

Bei einer vorteilhaften Ausgestaltung sind die Vertiefungen als Nuten und/oder Furchen ausgeformt. Von Vorteil ist dabei, dass die Vertiefungen in axialer Richtung sich erstrecken und somit in axialer Richtung länger als in Umfangsrichtung oder in radialer Richtung ausgedehnt sind und/oder sich erstrecken.

Bei einer vorteilhaften Ausgestaltung wird, nachdem das Statorblechpaket am Absatz zum Anliegen kommt, das Stempelteil entfernt. Von Vorteil ist dabei, dass axial gerichtete Vertiefungen an ersten Einzelblech verbleiben, da dort die Zapfen des Stempelteils eingepresst worden waren. Das Stempelteil selbst ist aus einem harten Material, insbesondere aus einem Material das härter ist das Material des Einzelblechs. Als Material des Stempelteils ist auch ein Stahl verwendbar, der härter ist als der für das Einzelblech verwendete Stahl.

Wichtige Merkmale bei dem Elektromotor, hergestellt nach einem vorgenannten Verfahren sind, dass das Statorblechpaket in Umfangsrichtung formschlüssig gehalten ist im Statorgehäuse,
wobei am Statorblechpaket nach radial außen hervorragende Materialbereiche in nach radial außen gerichtete Vertiefungen, insbesondere Furchen und/oder Nuten, hineinragen,
insbesondere wobei der vom Statorblechpaket überdeckte Radialabstandsbereich mit dem vom Statorgehäuse überdeckten Radialabstandsbereich überlappt,
insbesondere
   - wobei der lichte Radius der Aufnahmebohrung im Radialabstandsbereich des Überlappens angeordnet ist
   - und/oder wobei der vom Statorblechpaket überdeckte Radialabstandsbereich den Radius der Aufnahmebohrung enthält,
   - und/oder wobei der vom Statorgehäuse überdeckte Radialabstandsbereich an den Radius der Aufnahmebohrung angrenzt.

Von Vorteil ist dabei, dass durch bloßes axiales Einpressen ein in Umfangsrichtung wirkender Formschluss bewirkbar ist. Somit ist Elektromotor einfach herstellbar, insbesondere ist eine belastbare Verbindung zwischen Statorgehäuse und Statorblechpaket in einfacher Weise herstellbar.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
In der Figur 1 ist die Herstellung eines erfindungsgemäßen Stators eines Elektromotors schematisch skizziert, wobei ein Statorblechpaket 3 mittels eines Stempelteils 1 auf ein Blechpaket 3 gepresst wird.

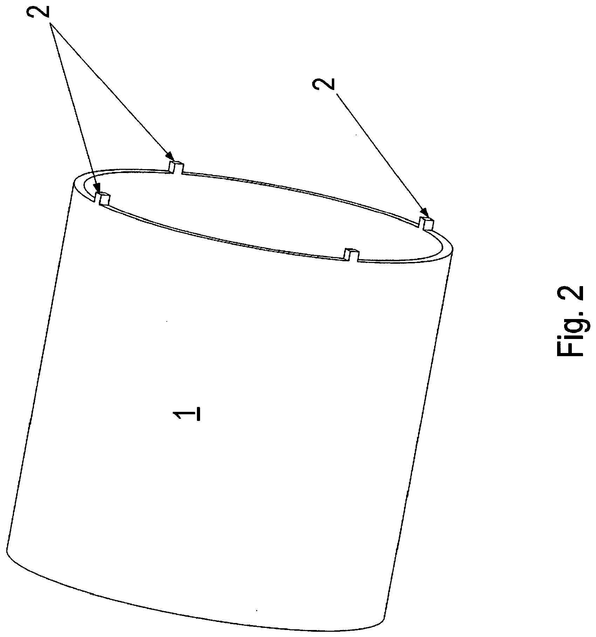

In der Figur 2 ist eine Schrägansicht auf das Stempelteil 1 dargestellt.

Wie in den Figuren gezeigt, weist das Stempelteil in auf die Drehachse des Rotors des Elektromotors bezogen Umfangsrichtung voneinander regelmäßig beabstandete Zapfen 2 auf. Diese Zapfen 2 sind auf demselben Radialabstand angeordnet, wobei der Radialabstand bezogen auf die Drehachse des Rotors ist.

Das Statorblechpaket 3 ist als Stapel von Einzelblechen ausgebildet und in einer Bohrung eines Statorgehäuses 4 aufgenommen.

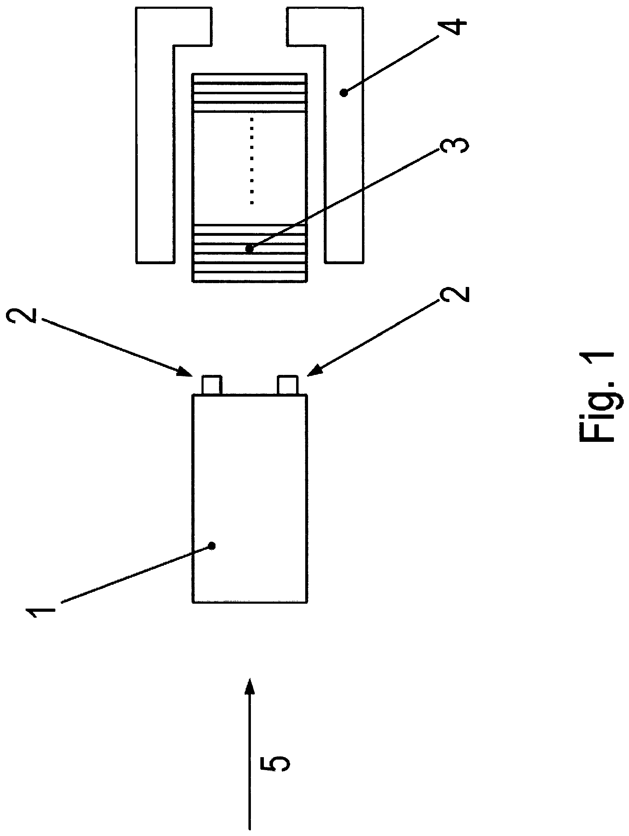

Mit einer in der Figur 1 nicht dargestellten Presse wird das Stempelteil 1 in Pressrichtung 5, also parallel zur Drehachse des Rotors, also in axialer Richtung, auf das Blechpaket 3 gepresst und somit dieses Blechpaket 3 gegen einen Absatz des Statorgehäuses 4 gedrückt. Sobald das Blechpaket 3 den Absatz berührt, ist eine sehr hohe Presskraft ins Blechpaket 3 einleitbar.

Die ins Blechpaket 3 schon vor dem Berühren des Absatzes aber vielmehr noch nach dem Berühren des Absatzes eingeleitete Kraft wird von der Presse über das Stempelteil 1 und seine zum Blechpaket 3 hervorragenden Zapfen 2 auf das dem Stempelteil 1 zugewandte erste Einzelblech des Blechpakets 3 eingeleitet.

Da die Zapfen 2 nur eine sehr kleine Berührfläche zum Einzelblech aufweisen, ist der in das erste Einzelblech eingeleitete Druck sehr hoch. Daher weichen Materialbereiche zumindest des ersten Einzelblechs in radialer Richtung aus, insbesondere auch schon vor Eintreten der Berührung des Absatzes durch das Blechpaket 3.

Da das Statorgehäuse 4 aus einem weicheren Material als das Blechpaket 3, insbesondere als das Einzelblech des Blechpakets 3, gefertigt ist und die Aufnahmebohrung für das Blechpaket 3 passgenau gefertigt ist, schneiden die nach radial außen ausweichenden Materialbereiche des Einzelblechs eine Vertiefung, insbesondere Furche und/oder Nut, in das Statorgehäuse 4, insbesondere in die Innenwandung des Statorgehäuses 4.

Durch die über die Zapfen 2 in das Einzelblech eingeleitete, hohe Presskraft erzeugen die Zapfen 2 jeweils axial gerichtete Vertiefungen im Einzelblech.

Da die Wandstärke aller Einzelbleche des Blechpaketes 3 sehr gering ist, gilt die vorstehend beschriebene Wirkung nicht nur für das erste, dem Stempelteil 1 zugewandten Einzelblech, sondern auch für im Stapel auf das erste Einzelblech folgenden Einzelbleche. Insbesondere verformen sich bei geeignet gewählter Presskraft die ersten drei oder mehr Einzelbleche.

Der von den nach radial außen hervorragenden Materialbereichen überdeckte jeweilige Umfangswinkelbereich enthält den von den Zapfen jeweils überdeckten Umfangswinkelbereich.

Die vom jeweiligen Zapfen 2 bewirkten Materialbereiche sind in Umfangsrichtung voneinander beabstandet.

Die Stapelrichtung ist parallel zur axialen Richtung ausgerichtet.

Vorzugswiese ist das Statorgehäuse 4 aus Aluminium und das Blechpaket, insbesondere die Einzelbelche, aus Stahl gefertigt. Jedes Einzelblech ist dabei als Stanzteil einfach und kostengünstig fertigbar.

Mittels der erzeugten Vertiefungen ist das Statorblechpaket 3 in Umfangsrichtung formschlüssig gesichert.

Die Zapfen 2 sind in Umfangsrichtung vorzugsweise regelmäßig voneinander beabstandet. Vorzugsweise

Bei weiteren erfindungsgemäßen Ausführungsbeispielen ist der Stapel stanzpaketiert, schweißverbunden und/oder geklammert.

Bei weiteren erfindungsgemäßen Ausführungsbeispielen ist der Stapel auch klebeverbunden.

### Bezugszeichenliste

1 Stempelteil
2 Zapfen
3 Statorblechpaket
4 Statorgehäuse
5 Pressrichtung

## Patentansprüche

1. Verfahren zum Herstellen eines Elektromotors,
wobei der Elektromotor ein Statorblechpaket und ein Statorgehäuse mit einer Aufnahmebohrung zur Aufnahme des Statorblechpakets aufweist,
wobei das Statorblechpaket Einzelbleche aufweist,
wobei das Statorblechpaket in die Aufnahmebohrung mittels eines Stempelteils mittels Einpressen, insbesondere während eines Einpressvorgangs, eingeführt wird,
**welches** Materialbereiche zumindest eines ersten der Einzelbleche des Statorblechpakets nach radial außen hervorstreckt und beim Einpressen Vertiefungen in der Wandung der Aufnahmebohrung, insbesondere in der Bohrwand der Aufnahmebohrung, erzeugt,
wobei das Statorblechpaket mittels der Vertiefungen, insbesondere der nach radial außen sich erstreckenden Vertiefungen, in Umfangsrichtung formschlüssig gehalten ist,
**dadurch gekennzeichnet, dass**
**das Stempelteil zum Statorblechpaket hervorragende Zapfen aufweist, welche geeignet sind, Material zumindest des ersten der Einzelbleche zu verdrängen.**

2. Verfahren nach Anspruch 1,
**dadurch gekennzeichnet, dass**
beim Einpressen die Presskraft über die Zapfen in das Statorblechpaket eingeleitet wird.

3. Verfahren nach einem der vorangegangenen Ansprüche,
**dadurch gekennzeichnet, dass**
beim Einpressen die Presskraft über die Zapfen in das Statorblechpaket eingeleitet wird.

4. Verfahren nach einem der vorangegangenen Ansprüche,
**dadurch gekennzeichnet, dass**
die Zapfen in Umfangsrichtung regelmäßig beabstandet sind, insbesondere voneinander regelmäßig beabstandet sind.

5. Verfahren nach einem der vorangegangenen Ansprüche,
**dadurch gekennzeichnet, dass**
das Statorblechpaket, insbesondere die Einzelbleche des Statorblechpakets, aus einem härteren Material als das Statorgehäuse gefertigt ist.

6. Verfahren nach einem der vorangegangenen Ansprüche,
**dadurch gekennzeichnet, dass**
das Statorblechpaket aus Stahl, insbesondere die Einzelbleche des Statorblechpakets aus Stahlblech, und das Statorgehäuse aus Aluminium gefertigt ist.

7. Verfahren nach einem der vorangegangenen Ansprüche,
**dadurch gekennzeichnet, dass**
die Einzelbleche als Stanzteile gefertigt sind.

8. Verfahren nach einem der vorangegangenen Ansprüche,
**dadurch gekennzeichnet, dass**
der jeweilige Zapfen beim Einpressen eine jeweilige axial gerichtete Vertiefung am Statorblechpaket erzeugt.

9. Verfahren nach einem der vorangegangenen Ansprüche,
**dadurch gekennzeichnet, dass**
das Statorblechpaket miteinander schweißverbundene Einzelbleche aufweist und/oder miteinander klammerverbundene Einzelbleche aufweist und/oder miteinander durch Stanzpaketierung verbundene Einzelbleche aufweist.

10. Verfahren nach einem der vorangegangenen Ansprüche,
**dadurch gekennzeichnet, dass**
das Einführen durch einen nach radial innen hervorragenden Absatz des Statorgehäuses beendet wird, nachdem das Statorblechpaket zum Anliegen an dem Absatz gekommen ist oder kommt.

11. Verfahren nach einem der vorangegangenen Ansprüche,
**dadurch gekennzeichnet, dass**
das nach radial außen gerichtete Hervorstrecken schon vor dem Anliegen des Statorblechpakets am Absatz bewirkt wird, während also als Reaktionskraft auf das Einpressen des Stempelteils nur die Reibung zwischen Statorgehäuse und Statorblechpaket wirkt.

12. Verfahren nach einem der vorangegangenen Ansprüche,
**dadurch gekennzeichnet, dass**
die Vertiefungen als Nuten und/oder Furchen ausgeformt sind.

13. Verfahren nach einem der vorangegangenen Ansprüche,
**dadurch gekennzeichnet, dass**
nachdem das Statorblechpaket am Absatz zum Anliegen kommt, das Stempelteil entfernt wird.

14. Elektromotor, hergestellt nach einem Verfahren nach einem der vorangegangenen Ansprüche,
**dadurch gekennzeichnet, dass**
das Statorblechpaket in Umfangsrichtung formschlüssig gehalten ist im Statorgehäuse,
wobei am Statorblechpaket nach radial außen hervorragende Materialbereiche in nach radial außen gerichtete Vertiefungen, insbesondere Furchen und/oder Nuten, hineinragen,
insbesondere wobei der vom Statorblechpaket überdeckte Radialabstandsbereich mit dem vom Statorgehäuse überdeckten Radialabstandsbereich überlappt,
insbesondere
- wobei der lichte Radius der Aufnahmebohrung im Radialabstandsbereich des Überlappens angeordnet ist
- und/oder wobei der vom Statorblechpaket überdeckte Radialabstandsbereich den Radius der Aufnahmebohrung enthält,
- und/oder wobei der vom Statorgehäuse überdeckte Radialabstandsbereich an den Radius der Aufnahmebohrung angrenzt.

## Claims

1. Method for producing an electric motor,
wherein the electric motor has a laminated stator core and a stator casing that has a receiving hole for receiving the laminated stator core,
wherein the laminated stator core has laminations,
wherein the laminated stator core is inserted into the receiving hole by press fitting, in particular during a press-fitting operation, by means of a die part, which method thrusts material regions of at least a first of the laminations of the laminated stator core radially outwards and generates recesses in the wall of the receiving hole, in particular in the boring wall of the receiving hole, during the press fitting,
wherein the laminated stator core is interlockingly held in the circumferential direction by means of the recesses, in particular the radially outwardly extending recesses, **characterised in that**
the die part has pins which project towards the laminated stator core and which are suitable for displacing material of at least the first of the laminations.

2. Method according to claim 1,
**characterised in that**
during the press fitting, the pressing force is introduced into the laminated stator core by means of the pins.

3. Method according to any of the preceding claims,
**characterised in that**
during the press fitting, the pressing force is introduced into the laminated stator core by means of the pins.

4. Method according to any of the preceding claims,
**characterised in that**
the pins are regularly spaced in the circumferential direction, in particular are regularly spaced apart from one another.

5. Method according to any of the preceding claims,
**characterised in that**
the laminated stator core, in particular the laminations of the laminated stator core, is made of a harder material than the stator casing.

6. Method according to any of the preceding claims,
**characterised in that**
the laminated stator core is made of steel, in particular the laminations of the laminated stator core are made of sheet steel, and the stator casing is made of aluminium.

7. Method according to any of the preceding claims,
**characterised in that**
the laminations are produced as punched parts.

8. Method according to any of the preceding claims,
**characterised in that**
during the press fitting, each pin produces one axially oriented recess each in the laminated stator core.

9. Method according to any of the preceding claims,
**characterised in that**
the laminated stator core has laminations interconnected by welding and/or laminations interconnected by clamping and/or laminations interconnected by punch-packing.

10. Method according to any of the preceding claims,
**characterised in that**
the insertion is terminated by a radially inwardly projecting shoulder of the stator casing once the laminated stator core has abutted or abuts the shoulder.

11. Method according to any of the preceding claims,
**characterised in that**
the radially outward thrusting is already brought about before the laminated stator core abuts the shoulder, i.e. while only the friction between the stator casing and the laminated stator core is acting as a reaction force to the press fitting by the die part.

12. Method according to any of the preceding claims,
**characterised in that**
the recesses are formed as grooves and/or channels.

13. Method according to any of the preceding claims,
**characterised in that**
the die part is removed once the laminated stator core abuts the shoulder.

14. Electric motor produced in accordance with a method according to any of the preceding claims,
**characterised in that**
the laminated stator core is interlockingly held in the stator casing in the circumferential direction,
wherein material regions projecting radially outwards on the laminated stator core project into radially outwardly oriented recesses, in particular channels and/or grooves,
in particular wherein the radial clearance region covered by the laminated stator core overlaps with the radial clearance region covered by the stator casing,
in particular
- wherein the clear radius of the receiving hole is arranged in the radial clearance region of the overlap,
- and/or wherein the radial clearance region covered by the laminated stator core includes the radius of the receiving hole,
- and/or wherein the radial clearance region covered by the stator casing adjoins the radius of the receiving hole.

## Revendications

1. Procédé de fabrication d'un moteur électrique,
le moteur électrique présentant un paquet de tôles de stator et un boîtier de stator avec un alésage d'accueil permettant d'accueillir le paquet de tôles de stator,
le paquet de tôles de stator présentant des tôles individuelles,
le paquet de tôles de stator étant inséré dans l'alésage d'accueil par enfoncement au moyen d'une partie formant poinçon, en particulier pendant une opération d'enfoncement,
qui étire radialement vers l'extérieur des régions de matériau d'au moins une première des tôles individuelles du paquet de tôles de stator et crée des creux dans la paroi de l'alésage d'accueil, en particulier dans la paroi alésée de l'alésage d'accueil, lors de l'enfoncement,
le paquet de tôles de stator étant retenu par complémentarité de forme dans la direction circonférentielle au moyen des cavités, en particulier des cavités s'étendant radialement vers l'extérieur,
**caractérisé en ce que**
la partie formant poinçon présente des tenons qui font saillie par rapport au paquet de tôles de stator et sont appropriés pour déplacer le matériau de au moins la première des tôles individuelles.

2. Procédé selon la revendication 1,
**caractérisé en ce que**
lors de l'enfoncement, la force de pression est introduite dans le paquet de tôles de stator par l'intermédiaire des tenons.

3. Procédé selon l'une quelconque des revendications précédentes,
**caractérisé en ce que**
lors de l'enfoncement, la force de pression est introduite dans le paquet de tôles de stator par l'intermédiaire des tenons.

4. Procédé selon l'une quelconque des revendications précédentes,
**caractérisé en ce que**
les tenons sont régulièrement espacés dans la direction circonférentielle, en particulier régulièrement espacés les uns des autres.

5. Procédé selon l'une quelconque des revendications précédentes,
**caractérisé en ce que**
le paquet de tôles de stator, en particulier les tôles individuelles du paquet de tôles de stator, est/sont réalisé(es) à partir d'un matériau plus dur que celui du boîtier de stator.

6. Procédé selon l'une quelconque des revendications précédentes,
**caractérisé en ce que**
le paquet de tôles de stator est réalisé en acier, en particulier les tôles individuelles du paquet de tôles de stator sont réalisées en tôle d'acier, et le boîtier de stator est réalisé en aluminium.

7. Procédé selon l'une quelconque des revendications précédentes,
**caractérisé en ce que**
les tôles individuelles sont réalisées sous forme de pièces estampées.

8. Procédé selon l'une quelconque des revendications précédentes,
**caractérisé en ce que**
lors de l'enfoncement, le tourillon respectif crée au niveau du paquet de tôles de stator un renfoncement respectif orienté de manière axiale.

9. Procédé selon l'une quelconque des revendications précédentes,
**caractérisé en ce que**
le paquet de tôles de stator présente des tôles individuelles reliées entre elles par soudage et/ou présente des tôles individuelles reliées entre elles par agrafage et/ou présente des tôles individuelles reliées entre elles par feuilletage.

10. Procédé selon l'une quelconque des revendications précédentes,
**caractérisé en ce que**
il est mis fin à l'insertion grâce à un talon, faisant saillie radialement vers l'intérieur, du boîtier de stator après que le paquet de tôles de stator vient en appui ou est venu en appui contre le talon.

11. Procédé selon l'une quelconque des revendications précédentes,
**caractérisé en ce que**
l'étirage orienté radialement vers l'extérieur est déjà provoqué avant que le paquet de tôles de stator ne s'appuie contre le talon, alors que seule la friction entre le boîtier de stator et le paquet de tôles de stator agit comme force de réaction à l'enfoncement de la partie formant poinçon.

12. Procédé selon l'une quelconque des revendications précédentes,
**caractérisé en ce que**
les cavités sont façonnées sous la forme de rainures et/ou de sillons.

13. Procédé selon l'une quelconque des revendications précédentes,
**caractérisé en ce que**
la partie formant poinçon est retirée une fois que le paquet de tôles de stator vient en appui contre le talon.

14. Moteur électrique, fabriqué grâce à un procédé selon l'une quelconque des revendications précédentes,
**caractérisé en ce que**
le paquet de tôles de stator est retenu par complémentarité de forme dans la direction circonférentielle dans le boîtier de stator,
des régions de matériau qui font saillie radialement vers l'extérieur au niveau du paquet de tôles de stator pénétrant dans des cavités, en particulier des rainures et/ou des rainures, orientées radialement vers l'extérieur,
la région d'espacement radial couverte par le paquet de tôles de stator chevauchant en particulier la région d'espacement radial couverte par le boîtier de stator,
en particulier
- le rayon libre de l'alésage d'accueil étant agencé dans la région d'espacement radial du chevauchement
- et/ou la région d'espacement radial couverte par le paquet de tôles de stator contenant le rayon de l'alésage d'accueil,
- et/ou la région d'espacement radial couverte par le boîtier de stator étant adjacente au rayon de l'alésage d'accueil.
